# EUROPEAN PATENT APPLICATION

(11) **EP 4 501 870 A1**
(43) Date of publication of application: **05.02.2025**
(21) Application number: 23774943.7
(22) Date of filing: 22.03.2023
(51) Int. Cl.: C03B 29/02, C03C 17/02, C03C 17/04, C04B 41/87, C23C 4/11, C23C 4/12, C23C 24/08

(54) **METHOD FOR MANUFACTURING QUARTZ MEMBER, METHOD FOR FORMING SILICA COATING, AND METHOD FOR SMOOTHING SURFACE OF MEMBER MADE FROM QUARTZ**

(30) Priority: 24.03.2022 JP 2022048646
(71) Applicant: Mitsubishi Chemical Corporation, Tokyo 100-8251 (JP)
(72) Inventor: MUNEHIRA, Masami, Tokyo 100-8251 (JP); KATOU, Yuuichi, Tokyo 100-8251 (JP); MIHARA, Shouzo, Tokyo 100-8251 (JP)
(74) Representative: Vossius & Partner Patentanwälte Rechtsanwälte mbB
(86) International application number: PCT/JP2023/011199
(87) International publication number: WO 2023/182348

(57) **Abstract**

A method for forming a silica coating by spraying silica onto an outer peripheral surface of a quartz substrate 1 using a burner 4, wherein a thermally conductive material 5 having a thermal conductivity of 30 W/m·K or more at 25°C is fitted into an inner hole of the quartz substrate 1, and spraying is performed in a state where an inner peripheral surface of the quartz substrate 1 is in contact with the outer peripheral surface of the thermally conductive material 5.

## Description

### Technical Field

The present invention relates to a manufacturing method of a quartz member. The present invention also relates to a method for forming a silica (quartz glass) coating on a substrate (target member). The present invention also relates to a method for smoothing a surface of a quartz member.

### Background Art

As machines, devices, containers, etc. used in semiconductor manufacturing processes, those having a sprayed coating of quartz glass are used.

As a method for coating quartz glass on a surface of a substrate, Patent Literature 1 describes a method of spraying silica using a quartz oxyhydrogen burner.

Patent Literature 2 describes a method for forming a quartz glass sprayed film on a side surface of a substrate using a plasma spraying method.

### Citation List

### Patent Literature

Patent Literature 1: JP 7-126025 A
Patent Literature 2: JP 2004-142996 A

### Summary of Invention

### Technical Problem

Silica coatings are often formed using oxyhydrogen flames, plasma, and the like. When forming a silica coating on a substrate, it is necessary to heat the substrate to the vicinity of the silica melting point (approximately 1690°C), but heating the substrate to the vicinity of the silica melting point may cause thermal deformation of the substrate.

An object of one aspect of the present invention is to provide a method for manufacturing a quartz member that can suppress thermal deformation of a substrate when manufacturing the quartz member.

An object of one aspect of the present invention is to provide a method for forming a silica coating that can suppress thermal deformation of a substrate when performing silica coating.

An object of one aspect of the present invention is to provide a method for smoothing a surface of a substrate while suppressing thermal deformation of the substrate.

### Solution to Problem

After extensive research, the inventors discovered that thermal deformation of a substrate during coating formation can be prevented by contacting a material with high thermal conductivity with a quartz substrate, and arrived at the present invention. That is, one aspect of the present invention is as follows.

[1] A method for manufacturing a quartz member from a quartz substrate, comprising a contact step of contacting the quartz substrate with a thermally conductive material having a thermal conductivity of 30 W/m·K or more at 25°C.
[2] The method for manufacturing a quartz member according to [1], comprising:
   a thermal spraying step of thermally spraying silica onto one side of the quartz substrate; and
   the contact step of contacting a surface opposite the one side of the substrate with the thermally conductive material having a thermal conductivity of 30 W/m·K or more at 25°C during the thermal spraying step.
[3] The method for manufacturing a quartz member according to [1], comprising:
   a deposition step of depositing silica powder onto one side of the quartz substrate;
   a melting step of heating and melting the silica powder; and
   the contact step of contacting a surface opposite the one side of the substrate with the thermally conductive material having a thermal conductivity of 30 W/m-K or more at 25°C during the melting step.
[4] The method for manufacturing a quartz member according to [1], comprising:
   a smoothing step of heating one surface of the quartz member to smooth the surface; and
   the contact step of contacting the thermally conductive material having a thermal conductivity of 30 W/m·K or more at 25°C with a surface opposite the one surface of the substrate in the smoothing step.
[5] The method for manufacturing a quartz member according to [4], wherein the quartz member is heated in the smoothing step so that the surface temperature becomes 1690°C or higher.
[6] The method for manufacturing a quartz member according to any one of [1] to [4], wherein the thermal conductivity of the thermally conductive material is 38 W/m·K or more at 25°C.
[7] The method for manufacturing a quartz member according to any one of [1] to [4], wherein the thermally conductive material is a carbon material or silicon carbide.
[8] A method for forming a silica coating comprising a step of thermally spraying silica onto one surface of a quartz substrate,
   wherein the thermally spraying step is performed by bringing a thermally conductive material having a thermal conductivity of 30 W/m·K or more at 25°C into contact with a surface of the substrate opposite the one surface.
[9] A method for forming a silica coating comprising a step of depositing silica powder on an upper surface of a quartz substrate and a heating step of heating the silica powder,
   wherein the heating step is performed in a state where a thermally conductive material having a thermal conductivity of 30 W/m·K or more at 25°C is in contact with a lower surface of the substrate.
[10] The method for forming a silica coating according to [8] or [9], wherein the thermal conductivity of the thermally conductive material is 38 W/m·K or more at 25°C.
[11] A method for smoothing a surface of a quartz member comprising a heating step in which one side of the quartz member is heated to 1690°C or higher to smooth the surface,
   wherein the heating step is performed in a state where a thermally conductive material having a thermal conductivity of 30 W/m·K or more at 25°C is in contact with the other side of the quartz member.
[12] The method for smoothing a surface of a quartz member according to [11], wherein the thermal conductivity of the thermally conductive material is 38 W/m·K or more at 25°C.
[13] A method for manufacturing a quartz member from a quartz base material,
   including a heating step for heating one side of the quartz base material,
   and a contact step for contacting the surface opposite to the one side with a thermally conductive material having a thermal conductivity of 30 W/m·K or more at 25°C during the heating step.
[14] The method for manufacturing a quartz member according to [13], in which the heating step is a thermal spraying step.
[15] The method for manufacturing a quartz member according to [13], in which the heating step is a melting step.
[16] The method for manufacturing a quartz member according to [13], in which the heating step is a smoothing step.

### Advantageous Effects of Invention

According to the method for manufacturing a quartz member of the present invention, a part of the heat given from the burner to the substrate is transferred from the substrate to the thermal conductive material, thereby preventing localized temperature rise in the substrate and suppressing thermal deformation of the substrate.

According to the method for forming a silica coating of the present invention, a part of the heat given from the burner to the substrate is transferred from the substrate to the thermal conductive material, thereby preventing localized temperature rise in the substrate and suppressing thermal deformation of the substrate.

According to the method for smoothing the surface of a quartz member of the present invention, the surface of the quartz member is smoothed while suppressing thermal deformation of the substrate.

### Brief Description of Drawings

[Fig. 1] Fig. 1 is a side view illustrating a method for manufacturing a quartz member according to an embodiment, in particular a method for forming a silica coating.
[Fig. 2] Fig. 2 is a side view illustrating a method for manufacturing a quartz member according to another embodiment, in particular a method for forming a silica coating.
[Fig. 3] Fig. 3 is a side view illustrating a method for manufacturing a quartz member according to another embodiment, in particular a method for forming a silica coating.
[Fig. 4] Fig. 4 is a side view illustrating a method for manufacturing a quartz member according to another embodiment, in particular a method for forming a silica coating.

### Description of Embodiment

The following describes in detail an embodiment of the present invention, but the present invention is not limited to the following embodiment, and can be carried out in various modifications within the scope of the gist of the invention.

In one aspect of the present invention, a quartz member is manufactured by including a contact step in which a thermally conductive material is brought into contact with a quartz substrate.

In one aspect of the present invention, a silica coating is formed on one surface on which a silica coating is to be formed of a substrate in a state where a thermally conductive material is in contact with the other surface opposite the one surface on which the silica coating is formed.

### [Contact step]

The manufacturing method of the quartz member of the present invention includes a contacting step of contacting a thermally conductive material to a quartz substrate.

The contact step may or may not be included in any of the heating processes described below, such as the spraying process, the melting process, or the smoothing process. From the viewpoint of suppressing thermal deformation of the substrate, it is preferable that the contact step is included in any of the heating processes, such as the spraying process, the melting process, or the smoothing process.

The contact of the thermally conductive material to the quartz substrate may be performed throughout each of the above processes, but from the viewpoint of suppressing thermal deformation of the substrate, the contact may be interrupted as appropriate, or the contact may be performed across multiple processes.

The thermal conductivity of the thermally conductive material is 30 W/m·K or more at 25°C, and preferably 38 W/m·K or more. It is desirable for the thermal conductivity of the thermally conductive material to be high. If the thermal conductivity is 30 W/m·K or more at 25°C, thermal deformation of the base material can be prevented. The upper limit of the thermal conductivity of the thermally conductive material is not limited, but is usually 60 W/m·K or less at 25°C.

The thermally conductive material is preferably a material that is less reactive with quartz, and carbon material or silicon carbide (SiC) is specifically preferred.

The thermally conductive material preferably has a size and shape that contacts at least part of one side opposite the other side of the substrate, the other side of the substrate being the side to which the thermal spraying process or melting process is performed, the coating formation surface, or the surface to be smoothed. It is particularly preferable that the thermally conductive material has a size and shape so that the material contacts 50% or more of the one side of the substrate, for example, the entire surface of the one side.

### [Heating step]

The manufacturing method of the quartz member of the present invention may include a heating step.

Examples of the heating step include the thermal spraying process, melting process, and smoothing process described below.

### [Formation of silica coating]

The manufacturing method of the quartz member of the present invention may include a thermal spraying step or a melting step as a process for forming a silica coating on a quartz substrate.

The shape of the substrate may be any shape, such as a plate, rod, or cylinder, as long as it has a surface on which the silica coating is formed and an opposite surface.

The material of the substrate may be any material that can withstand the heat during the formation of the silica coating. The material of the substrate is preferably quartz at least in the portion on which the silica coating is formed, and more preferably the material of the entire substrate is quartz.

In the case of a substrate in which at least the portion on which the silica coating is formed is made of quartz, the distance from the surface on which the silica coating is formed to the opposite surface (i.e., the thickness) is preferably 1 to 10 mm, and particularly preferably 2 to 4 mm.

Methods for forming a silica coating include, but are not limited to, a method of spraying silica powder with oxyhydrogen flame or plasma (spraying process), a method of depositing silica powder on the upper surface of the substrate and heating it with oxyhydrogen flame or plasma to melt the silica and adhere it to the substrate (melting process).

The temperature when heating with oxyhydrogen flame or plasma is 1690°C, which is the melting point of silica or higher, and preferably lower than 2200°C. When the temperature is equal to or higher than 2200°C, the heat dissipation effect of the thermal conductive material cannot keep up, and the substrate may be thermally deformed. In addition, the raw silica may vaporize and become fumed silica, which may contaminate the substrate.

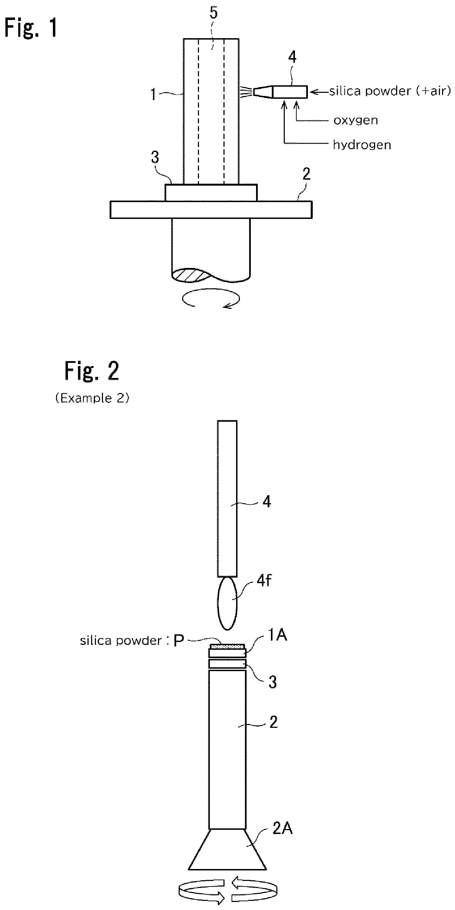

An example of a silica coating method will be described below with reference to the drawings. Fig. 1 shows an example of a method for forming a silica coating by spraying silica powder onto the outer peripheral surface of a cylindrical quartz substrate 1.

A plate-shaped base 3 is placed on a turntable 2. The base 3 is preferably made of the same material as the thermally conductive material 5, but may be made of other heat-resistant materials.

The substrate 1 is placed vertically on the base 3 coaxially with the rotation axis of the turntable 2. A cylindrical thermally conductive material 5 is inserted into the substrate 1. The diameter of the thermally conductive material 5 is the same as the inner diameter of the substrate 1, and the outer peripheral surface of the thermally conductive material 5 is in contact with the inner peripheral surface of the substrate 1.

When there is a difference in linear expansion between the thermally conductive material and the substrate, particularly when the linear expansion of the thermally conductive material is large, tensile stress acts on the substrate due to thermal expansion during coating formation, which may cause cracks. In such a case, it is preferable to heat the thermally conductive material in advance and then abut it against the opposite surface of the substrate.

A quartz burner 4 is arranged so as to spray an oxyhydrogen flame toward the side peripheral surface of the substrate 1. The burner 4 is movable in the vertical direction. The turntable 2 may also be movable up and down.

Oxygen and hydrogen are supplied to the burner 4, and silica powder is supplied by a carrier gas such as air, and the silica is sprayed onto the outer peripheral surface of the substrate 1. By rotating the turntable 2 and moving the burner 4 upward or downward, a silica coating is formed on the outer peripheral surface of the substrate 1.

In the embodiment shown in FIG. 1, the outer diameter of the substrate 1 is usually 40 to 500 mm, the inner diameter is usually 30 to 490 mm, the thickness is usually 3 to 10 mm, and the height is usually 100 to 1500 mm. The burner 4 may be installed horizontally, and the installation angle is not important. The burner 4 may be installed at any angle of 360° to the substrate 1.

In Fig. 1, the thermally conductive material 5 is columnar, but it may also be cylindrical.

In Fig. 1, the substrate 1 is cylindrical, but it may have other shapes, such as a plate. When the substrate has a plate shape, the plate-shaped substrate 1A is placed on the upper surface of the base 3 made of a thermally conductive material on the turntable 2, and the burner 4 is placed facing downward. The base 3 is larger than the substrate 1A, and the entire lower surface of the substrate 1A is in contact with the upper surface of the base 3.

The turntable 2 is rotated and the burner 4 is moved in the radial direction of the turntable 2, whereby a silica coating is formed on the upper surface of the substrate 1A. A work table other than the turntable may be used. In this case, the work table or the burner 4 is moved in the X-Y direction to form the silica coating.

The relative movement speed of the burner 4 with respect to the substrate surface is preferably 1 to 10 mm/sec. When it is less than 1 mm/sec, productivity is poor, and when it is more than 10 mm/sec, the substrate may not be sufficiently heated, resulting in inappropriate coating.

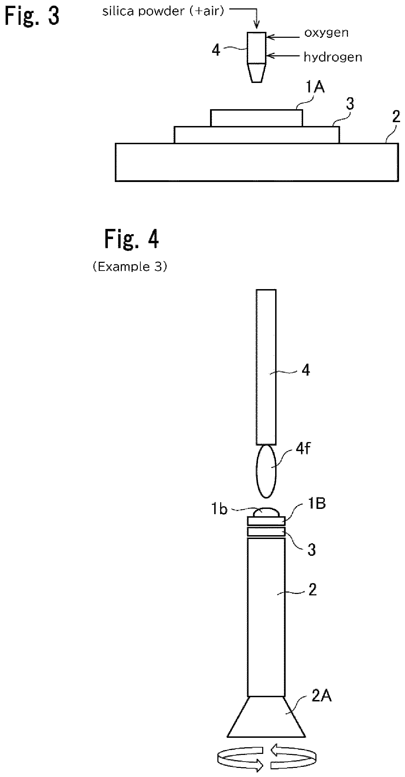

In Figs. 1 and 3, silica is sprayed using the flame spray burner, but as shown in Fig. 2, silica powder P may be deposited on the upper surface of the substrate 1A, and only the flame from the burner 4 may be irradiated to melt the silica powder P to form a silica coating on the upper surface of the substrate 1A. Instead of irradiating a flame from the burner 4, plasma may be irradiated using a plasma torch.

In the case of the method of FIG. 2, the thickness of the silica powder P deposited on the upper surface of the substrate 1A is preferably about 0.5 to 10 mm, but is not limited to this.

It is preferable that the raw silica powder has high purity (for example, over 5N) because the purity of the obtained film is higher, but the present invention is not limitative thereto. Powder with a purity of 5N or less, such as natural quartz powder, may be used depending on the application.

The particle size of the raw silica powder is usually 20 to 400 um, preferably 40 to 200 µm, and more preferably 50 to 80 µm.

When the particle size is 20 µm or more, the silica powder is less likely to vaporize during being thermally sprayed from the burner or during being irradiated with the flame or plasma, and is less likely to become fumed silica, whereby increasing the film formation yield. When the particle size is 400 µm or less, the silica powder is more likely to be guided by the oxyhydrogen combustion flame, and a film is formed on the target surface without variation or scatter.

Although the present invention is not particularly limited, examples of the substrate or quartz member include so-called quartz jigs, such as an etching ring in a plasma etching apparatus, a quartz plate, a rectangular cleaning tank, and a furnace tube used in an apparatus for forming an oxide coating on a semiconductor wafer.

### [Smoothing process]

The manufacturing method of the quartz member of the present invention may include a smoothing process in which a surface of one side of the quartz member is heated to smooth the surface.

In Fig. 1, a quartz member having a convex portion on its outer periphery is used as the substrate 1. The convex portion of the outer periphery of the quartz member is heated by flame or plasma from the burner 4. The convex portion is melted by this, and the outer periphery of the quartz member becomes flat.

Furthermore, as shown in Fig. 4, a quartz member having a convex portion 1b on its upper surface is used as a substrate 1B. Silica powder is not deposited on the upper surface of the substrate 1B, and the vicinity of the convex portion 1b on the upper surface of the substrate 1B is heated by flame 4f or plasma from a burner 4. The convex portion 1b is melted by this, and the upper surface of the substrate 1B becomes flat.

From the viewpoint of smoothing the surface, the temperature of the surface of the quartz member when one side of the quartz member is heated in the smoothing step is preferably 1690°C or higher, more preferably 1750°C or higher, even more preferably 1800°C or higher, and most preferably 1850°C or higher.

The manufacturing method of the quartz member of the present invention does not need to include one or more of the spraying step, melting step, and smoothing step. When multiple steps including the contact step are included, they may be performed in any order.

### Examples

### [Example 1]

A silica coating was formed on the outer circumferential surface of the cylindrical substrate 1 made of quartz by the method shown in Fig. 1.

The main conditions are as follows.

External diameter of the substrate 1: 80 mm
Inner diameter of the substrate 1: 75 mm
Height of the substrate 1: 400 mm
Heat conductive material 5: Carbon rod with a diameter of 74 mm and a height of 80 mm (thermal conductivity of 40 W/m·K at 25°C)
Base 3: Plate
Installation angle of burner 4: Diagonally downward (30° from the horizontal plane)
Distance between the tip of burner 4 and the peripheral surface of the substrate: 160 mm
Material of the turntable 2: Quartz
Rotation speed of turntable 2: 0.3 rpm
Method of fitting the heat conductive material 5: After sufficiently preheating the heat conductive material 5 with a quartz burner, it was fitted into the substrate 1.
Amount of silica powder supplied to the burner 4: 0.6 g/mm (carrier gas was air)
Temperature of the outer circumferential surface of the substrate irradiated with oxyhydrogen flame: 1700°C or higher

Under the above conditions, the burner 4 was moved downward by 5 mm each time the substrate rotated once, and a silica coating was formed on approximately 30% of the outer circumferential surface of the substrate 1. The coating formation time was 20 min.

After coating was completed, the heat conductive material 5 was removed and the substrate was observed, and it was found that no deformation had occurred.

### [Comparative Example 1]

A silica coating was formed on the outer circumferential surface of the substrate under the same conditions as in Example 1, except that the heat conductive material 5 was not used.

After coating was completed without the heat conductive material 5, the substrate was observed, and it was found that part of the inner circumferential surface of substrate 1 had deformed in the direction of reducing diameter.

### [Example 2]

As shown in Fig. 2, a 20 mm x 20 mm x 5 mm thick plate made of silicon carbide (thermal conductivity: 60 W/m·K at 25°C) was placed on a quartz turntable 2 rotated by a rotating device 2A as a thermally conductive base 3. A substrate 1A made of a quartz plate measuring 20 mm x 20 mm x 4 mm thick was placed on the top of the plate. Silica powder was deposited to a thickness of 2 mm on the entire upper surface of the substrate 1A. An oxyhydrogen flame 4f was applied from a burner 4 to heat the upper surface of the substrate 1A to 1700°C or higher.

The turntable 2 was rotated at 300 rpm to form a silica coating. The working time was 10 min.

After the silica coating was formed, the substrate 1A was observed and found to have no deformation.

### [Comparative Example 2]

A silica coating was formed under the same conditions as in Example 2, except that the base 3 was not used and the substrate 1A was placed directly on the turntable 2.

After the silica coating was formed, the substrate 1A was observed and it was found that the substrate 1A had a warp of 2 mm (the ends were turned up).

### [Example 3]

As shown in Fig. 4, a substrate 1B was used in which a 10 x 10 mm area in the center of the top surface was a mountain-shaped convex portion 1b. The height of the convex portion 1b from the top surface of the substrate 1B other than the convex portion 1b was 1 mm. In addition, no silica powder was deposited.

The vicinity of the convex portion 1b was heated to 1700°C or higher for 5 minutes with the burner 4. As a result, the convex portion 1b disappeared and the top surface of the substrate 1B became flat. In addition, no warp deformation occurred in the substrate 1B.

Although the present invention has been described in detail using specific embodiments, it will be apparent to those skilled in the art that various modifications are possible without departing from the spirit and scope of the present invention.

This application is based on Japanese Patent Application No. 2022-048646 filed on March 24, 2022, and is incorporated by reference in its entirety.

### Reference Signs List

- 1, 1A, 1B: Substrate
- 2: Turntable
- 3: Base
- 4: Burner
- 5: Thermally conductive material

## Claims

1. A method for manufacturing a quartz member from a quartz substrate, comprising a contact step of contacting the quartz substrate with a thermally conductive material having a thermal conductivity of 30 W/m·K or more at 25°C.

2. The method for manufacturing a quartz member according to claim 1, comprising:
a thermal spraying step of thermally spraying silica onto one side of the quartz substrate; and
the contact step of contacting a surface opposite the one side of the substrate with the thermally conductive material having a thermal conductivity of 30 W/m·K or more at 25°C during the thermal spraying step.

3. The method for manufacturing a quartz member according to claim 1, comprising:
a deposition step of depositing silica powder onto one side of the quartz substrate;
a melting step of heating and melting the silica powder; and
the contact step of contacting a surface opposite the one side of the substrate with the thermally conductive material having a thermal conductivity of 30 W/m·K or more at 25°C during the melting step.

4. The method for manufacturing a quartz member according to claim 1, comprising:
a smoothing step of heating one surface of the quartz member to smooth the surface; and
the contact step of contacting the thermally conductive material having a thermal conductivity of 30 W/m·K or more at 25°C with a surface opposite the one surface of the substrate in the smoothing step.

5. The method for manufacturing a quartz member according to claim 4, wherein the quartz member is heated in the smoothing step so that the surface temperature becomes 1690°C or higher.

6. The method for manufacturing a quartz member according to any one of claims 1 to 4, wherein the thermal conductivity of the thermally conductive material is 38 W/m·K or more at 25°C.

7. The method for manufacturing a quartz member according to any one of claims 1 to 4, wherein the thermally conductive material is a carbon material or silicon carbide.

8. A method for forming a silica coating comprising a step of thermally spraying silica onto one surface of a quartz substrate,
wherein the thermally spraying step is performed by bringing a thermally conductive material having a thermal conductivity of 30 W/m·K or more at 25°C into contact with a surface of the substrate opposite the one surface.

9. A method for forming a silica coating comprising a step of depositing silica powder on an upper surface of a quartz substrate and a heating step of heating the silica powder,
wherein the heating step is performed in a state where a thermally conductive material having a thermal conductivity of 30 W/m·K or more at 25°C is in contact with a lower surface of the substrate.

10. The method for forming a silica coating according to claim 8 or 9, wherein the thermal conductivity of the thermally conductive material is 38 W/m·K or more at 25°C.

11. A method for smoothing a surface of a quartz member comprising a heating step in which one side of the quartz member is heated to 1690°C or higher to smooth the surface,
wherein the heating step is performed in a state where a thermally conductive material having a thermal conductivity of 30 W/m·K or more at 25°C is in contact with the other side of the quartz member.

12. The method for smoothing a surface of a quartz member according to claim 11, wherein the thermal conductivity of the thermally conductive material is 38 W/m·K or more at 25°C.
